(19) **Europäisches Patentamt / European Patent Office / Office européen des brevets**

(11) **EP 3 295 652 B1**

(12) # EUROPEAN PATENT SPECIFICATION

(45) Date of publication and mention of the grant of the patent:
**05.02.2020 Bulletin 2020/06**

(51) Int Cl.:
**H04L 29/06** (2006.01)     **H04L 12/24** (2006.01)
**G06F 9/46** (2006.01)     **G06F 21/62** (2013.01)
**G06F 9/50** (2006.01)     **H04L 29/08** (2006.01)

(21) Application number: **16856818.6**

(22) Date of filing: **08.10.2016**

(86) International application number:
**PCT/CN2016/101498**

(87) International publication number:
**WO 2017/067385 (27.04.2017 Gazette 2017/17)**

(54) **METHODS, SYSTEMS, AND APPARATUSES OF SERVICE PROVISIONING FOR RESOURCE MANAGEMENT IN A CONSTRAINED ENVIRONMENT**

VERFAHREN, SYSTEME UND VORRICHTUNGEN ZUR DIENSTBEREITSTELLUNG FÜR RESSOURCENVERWALTUNG IN EINER BESCHRÄNKTEN UMGEBUNG

PROCÉDÉS, SYSTÈMES ET APPAREILS DE FOURNITURE DE SERVICE POUR GESTION DE RESSOURCES DANS UN ENVIRONNEMENT CONTRAINT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2015 IN 5632CH2015**

(43) Date of publication of application:
**21.03.2018 Bulletin 2018/12**

(73) Proprietor: **Huawei Technologies Co., Ltd.**
**Longgang District**
**Shenzhen, Guangdong 518129 (CN)**

(72) Inventors:
• **KANTUBUKTA, Vasu**
**Shenzhen, Guangdong 518129 (CN)**
• **JADHAV, Rahul Arvind**
**Shenzhen, Guangdong 518129 (CN)**
• **YANG, Neng**
**Shenzhen, Guangdong 518129 (CN)**

(74) Representative: **Kreuz, Georg Maria**
**Huawei Technologies Duesseldorf GmbH**
**Riesstraße 25**
**80992 München (DE)**

(56) References cited:
| | |
|---|---|
| EP-A1- 1 631 019 | WO-A1-2005/109822 |
| CN-A- 101 409 710 | CN-A- 104 169 930 |
| US-A1- 2009 089 866 | US-A1- 2010 268 772 |

US-A1- 2012 117 214

• RAHMAN A ET AL: "Group Communication for CoAP; draft-ietf-core-groupcomm-03.txt", GROUP COMMUNICATION FOR COAP; DRAFT-IETF-CORE-GROUPCOMM-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-27, XP015088107, [retrieved on 2012-10-19]

• VASU K RAHUL A J YANGNENG HUAWEI: "Access Privilege Provisioning for Constrained Devices; draft-vasu-ace-core-access-privilege-provi sioning-00.txt", ACCESS PRIVILEGE PROVISIONING FOR CONSTRAINED DEVICES; DRAFT-VASU-ACE-CORE-ACCESS-PRIVILEGE- PROVI SIONING-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 15 April 2016 (2016-04-15), pages 1-30, XP015112621, [retrieved on 2016-04-15]

**(Cont. next page)**

- VASU K RAHUL A J YANGNENG HUAWEI: "Service Provisioning for Constrained Devices; draft-vasu-core-ace-service-provisioning-0 0.txt", SERVICE PROVISIONING FOR CONSTRAINED DEVICES; DRAFT-VASU-CORE-ACE-SERVICE-PROVISION ING-0 0.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2015 (2015-10-19), pages 1-25, XP015109404, [retrieved on 2015-10-19]
- LU LIU ET AL: "A Novel Operation Profit-Driven Admission Control Mechanism for Wireless Multimedia Service Delivery", MULTIMEDIA AND INFORMATION TECHNOLOGY, 2008. MMIT '08. INTERNATIONAL CONFERENCE ON, IEEE, PISCATAWAY, NJ, USA, 30 December 2008 (2008-12-30), pages 693-696, XP031477095, ISBN: 978-0-7695-3556-2
- SHELBY, Z.: 'Constrained RESTful Environments (CoRE) Link Format.' INTERNET ENGINEERING TASK FORCE (IETF) REQUEST FOR COMMENTS: 6690 31 August 2012, ISSN 2070-1721 XP015086404

**Description**

**TECHNICAL FIELD**

The present invention described herein, in general, relates to communication networks, and more particularly, to systems, methods, and apparatuses of service provisioning for resource management in constrained environment based on resource directory.

**BACKGROUND**

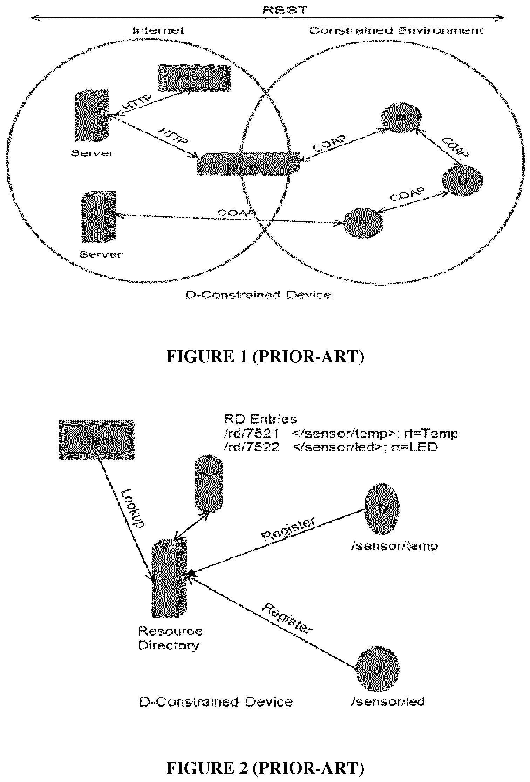

The research on Constrained Restful Environment (CoRE/CORE) is aimed to realize the restful architecture for constrained devices (as clearly discussed in the RFC**7228**) in constrained networks (discussed in RFC**4944**). The CORE work group has recently standardized constrained application protocol (CoAP) (discussed in RFC**7252**) for interacting with constrained resources where general HTTP is not memory/energy efficient as shown in Figure **1**. The use of web linking for resources description and discovery hosted by constrained web servers is specified by CORE (discussed in RFC**6690**). Even though, CoAP allows the direct resource access for constrained devices, it is not advisable for direct access of resources in the networks where multicast procedures are infeasible due to heavy network load, and the networks where sleepy nodes exist. So, the CoRE working group comes up with a solution called resource directory (RD) to host the devices service information, and allow other devices to perform lookup procedures through .well-known/core path to resources as shown in Figure **2**.

The services advertised by these constrained devices needs to be commissioned and provisioned properly to allow other devices to access it. CoRE RD solution is a directory based solution that depends on CoAP protocol. CORE RD solution uses registration/update/delete/lookup procedures for service registration, service update, deleting service, lookup of services respectively. Service commissioning is a method which verifies a pre-registered services with special commissioning tools/agents. These tools can be tablets or special embedded devices which initially stores the devices identifications in secure manner. Once the services are advertised by any device, those services need to be verified using commissioner. CORE RD provides a standard procedure to interact with commissioner, where commissioner acts like a client device to look up and verify the advertised services. Once the commissioner verifies the pre-registered services, commissioner can put some policy rules on services hosted by devices for resource control. These rules defined on (**1**) how to access the services either with other constrained devices or client devices, and (**2**) on operational instructions.

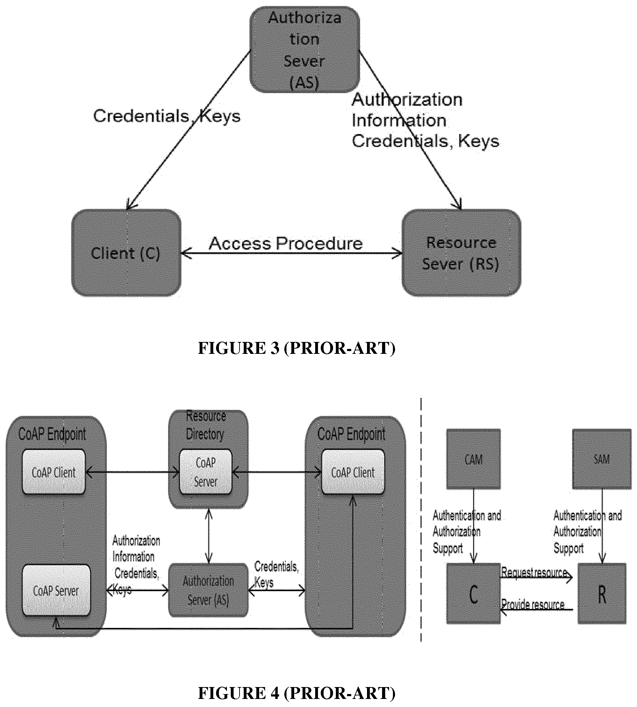

Architecture is defined to authenticate and authorize client requests for a resource on a server using logical entities such as client (C), client authorization manager (CAM), server (S), and server authorization manager (SAM) [draft-gerdes-ace-actors] as shown in Figure **3**. The main goal of delegated CoAP authentication and authorization framework (DCAF) is the setup of a datagram transport layer security channel between two nodes to securely transmit authorization tickets. The CAM sends an access request message on behalf of client by embedding requested permissions in client authorization information (CAI) field of access request message to SAM. A ticket grant message is sent from SAM by embedding the permissions given from the server on a specific resource in server authorization information (SAI) field of ticket grant message to the client. These SAI, CAI use authorization information format (AIF) that describes the permissions requested from access request in a ticket request, where the underlying access control model will be that of an access matrix, which gives a set of permissions for each possible combination of a subject and an object. This simple information model also doesn't allow conditional access (e.g., "resource /s/tempC is accessible only if client belongs to group **1** and does not belong to group**2**"). Finally, the model does not provide any dynamic functions such as enabling special access for a set of resources that are specific to a subject. But, the services provided by resources in constrained environment, need to be authorized and controlled conditionally based on some service level agreements or preconfigured policies on resource control.

In spite of having different technical solutions in the prior-art (including the above mentioned), in case of resource constrained environment, the resource management is critical along with authorization, where the service provisioning based on some service level negotiations between the clients and resources plays vital role. Moreover, it is required to provision the resource access threshold for clients before admitting at a particular time, otherwise it causes the network bandwidth to loose. Further, the resource management where the conditional access service provisioning based on some service level negotiations between the clients and resources within the constrained environment of a particular registered user is necessary.

In view of the above issues, the person skilled in that art is provided with a technical solution of using access control lists for resource control. Access controls are usually implemented in two main methods: access control list (ACL) and capabilities, which generally have four basic operations such as allowing access, denying access, limiting access, and revoking access. ACLs are usually used to control access in the file systems on which our operating systems run. There are two types of ACLs: File System ACLs, and Network ACLs.

File System ACL: ACLs in most file systems commonly use three permissions in use: read, write, and execute, respectively allowing us to access the file or directory, write to file or directory, and execute the contents of file. For example in UNIX like operating systems, separate access control list for a given file in the form of user, group is seen. Various permissions to different users or groups can be given. By using such sets of file permissions, one can control the operating system and its applications that utilize the file system. Microsoft and UNIX-like operating systems use this kind of access control lists. These kinds of ACLs follow simple access permissions (i.e. read, write, and execute) for various files or directories such as Linux or Windows OSs; however, these are not applicable in scenarios where it needs a dynamic way of ACL because in networks one needs to control the flow of traffic.

However, the above type of methods (ACL's) are not applicable to constrained network environment, because, the constrained environments are limited in terms of memory, power consumption of devices, and reliability. So, it always needs a conditional approaches for access control which protects resource from hazardous conditions, robust in operations, and improves the device lifetime. This kind of conditional access control always checks for certain conditions or criteria to be met for service access before granting the service access. Even though similar approaches are being used for content broadcasting for TV systems and for telecommunications systems, the conditional access control systems are much different in the constrained environments because the constrained devices are less in capability in terms nodes, scalability, networks, and message sizes, it altogether needs a different architecture for machine to machine communication.

In view of the above, there exists a need to provide a new and efficient technique that solves the problem of supporting dynamic way of conditional access and resource control policies on different clients based on network conditions and device capabilities in resource constrained environment.

US 2009/089866 A1 discloses an access authorization system, which can reduce the user wait time until the provision of a user-requested service. The access authorization system of the present invention specifies the next service to be provided to a UT (a client-side communication device) after the service currently being provided to the UT, and then executes process to make an authorization decision in advance regarding the next service with respect to the user of the UT, before the UT requests the next service.

RAHMAN A ET AL: "Group Communication for CoAP;draft-ietf-core-groupcomm-03" discloses how the CoAP protocol should be used in a group communication context. An approach for using CoAP on top of IP multicast is detailed for both constrained and un-constrained networks. Also, various use causes and corresponding protocol flows are provided to illustrate important concepts. Finally, guidance is provided for deployment in various network topologies.

## SUMMARY

This summary is provided to introduce concepts related to methods, systems, and apparatuses of service provisioning for resource management in a constrained environment, and are further described below in the detailed description. This summary is not intended to identify essential features of the claimed subject matter nor is it intended for use in determining or limiting the scope of the claimed subject matter.

In one implementation, a system is disclosed. The system comprises resources, at least one client device, at least one device, at least one database, and a processor, and a memory coupled to the processor for executing a plurality of modules present in the memory. The plurality of modules comprises an obtaining module configured to obtain at least one verified service information associated with at least pre-registered service provided by at least one resource; a creation module configured to create at least one service registry holding the verified service information obtained, create at least one service identification (ID) against the service registry created, and create at least an admission control policy and/or at least a resource control policy for the service ID created; a lookup module, on receipt of at least one request from at least one client device to access the services, configured to lookup for services provided by the resources; and an access module, based on availability of the service requested by the client device, configured to grant admission to access the service provided by the resource, based on the admission control policy and/or the resource control policy, wherein, the verified service information is received from at least one device configured to verify sender information associated with the pre-registered service provided by the resource against the details of all the services provided by all the resources in a network stored in at least one database, and thereby obtaining, from the database, a domain information and at least one group information in which the resource is categorized.

As compared to the prior-art techniques, the present invention enables to achieve supporting dynamic way of conditional access and resource control policies on different clients based on network conditions and device capabilities using commissioning procedure.

## BRIEF DESCRIPTION OF THE ACCOMPANYING DRAWINGS

The detailed description is described with reference to the accompanying figures. In the figures, the left-most digit(s) of a reference number identifies the figure in which the reference number first appears. The same numbers are used throughout the drawings to refer like features and components.

Figure **1** illustrates CoAP Application Protocol as available in the prior-art.

Figure **2** illustrates an example of resource directory (RD) storing paths of various resources available in the network, as available in the prior-art.

Figure **3** illustrates an architecture is defined to authenticate and authorize client requests for a resource on a server using logical entities, as available and known in the prior-art.

Figure **4** illustrates an IETF solutions/architecture to authenticate and authorize client requests for a resource on a server using logical entities, as per the prior-art technique.

Figure **5** illustrates constrained device accessing service from constrained device (system), in accordance with an embodiment of the present subject matter.

Figure **6** illustrates a client device accessing service from constrained device (system), in accordance with an embodiment of the present subject matter.

Figure **7** illustrates a network topology, in accordance with an embodiment of the present subject matter.

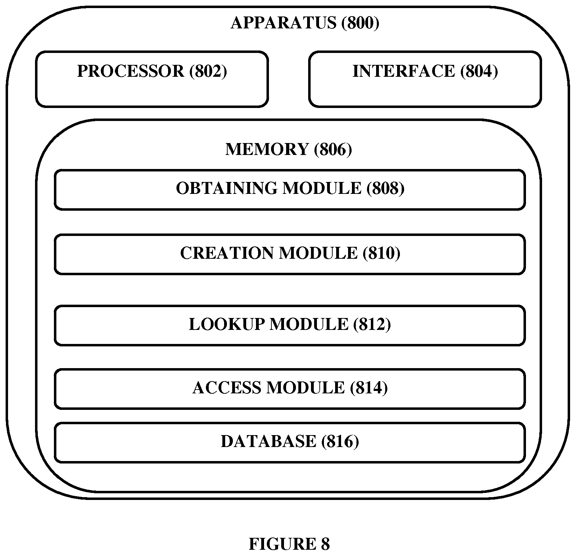

Figure **8** illustrates an apparatus for provisioning at least one admission control policy and/or at least one resource control policy to at least one service in a network, in accordance with an embodiment of the present subject matter.

Figure **9** illustrates a process of authorization, admission, and resource control of device services, in accordance with an embodiment of the present subject matter.

Figure **10** illustrates a method for provisioning at least one admission control policy and/or at least one resource control policy to at least one service in a network, in accordance with an embodiment of the present subject matter.

Figure **11** illustrates a process of registering a service, in accordance with an embodiment of the present subject matter.

Figure **12** illustrates a process of verifying a pre-registered service, in accordance with an embodiment of the present subject matter.

Figure **13** illustrates a process of defining policies on resource control, in accordance with an embodiment of the present subject matter.

Figure **14** illustrates an exemplary permissions on methods/devices, in accordance with an embodiment of the present subject matter.

Figure **15** illustrates a process of group and QoS classification for clients, in accordance with an embodiment of the present subject matter.

Figure **16** illustrates a process of searching for services by device, in accordance with an embodiment of the present subject matter.

Figure **17** illustrates a process of request/response within constrained environment, in accordance with an embodiment of the present subject matter.

Figure **18** illustrates a process of request/response from outside constrained environment, in accordance with an embodiment of the present subject matter.

Figure **19** illustrates a constrained device accessing service from constrained device while requesting device verifying the authority from provisioning server in accordance with an embodiment of the present subject matter.

Figure **20** illustrates a process of request/response in scenario **3** as provide in figure **19**, in accordance with an embodiment of the present subject matter.

Figure **21** illustrates constrained device accessing service from constrained device via. Provisioning server, in accordance with an embodiment of the present subject matter.

Figure **22** illustrates a process of Request/Response in scenario **4** as provide in figure **21**, in accordance with an embodiment of the present subject matter.

Figure **23** illustrates Scenario **1**: constrained device accessing service from client device, Scenario **2**: constrained device accessing service from constrained device, in accordance with an embodiment of the present subject matter.

Figure **24** illustrates Scenario **3**: constrained device accessing service from constrained device with pre verification by provisioning server. Scenario **4**: Constrained device accessing service from constrained device via provisioning server, in accordance with an embodiment of the present subject matter.

Figure **25** illustrates a method for authorizing at least one client device to access at least one service provided by at least one resource, and managing access of the resource by providing conditional admission and/or resource control on the service provided by the resource based service level agreement, in accordance with an embodiment of the present subject matter.

It is to be understood that the attached drawings are for purposes of illustrating the concepts of the invention and may not be to scale.

## DETAILED DESCRIPTION OF THE PRESENT INVENTION

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Service provisioning systems, methods and apparatuses to support configurations of admission control, and resource control policies for constrained devices by using commissioning procedure are disclosed.

While aspects are described for providing service provisioning systems, methods and apparatuses to support configurations of admission control, and resource control policies for constrained devices by using commissioning procedure, the present invention may be implemented in any number of different computing systems, environments, and/or configurations, the embodiments are described in the context of the following exemplary systems, apparatus, and methods.

In one implementation, the present invention enables to provision the service when non-constrained device accessing service provided by constrained device.

In one implementation, the present invention enables to provision the service when one constrained device accessing service provided by other constrained device.

The service provisioning method enables the conditional access of resources for different clients based on service level agreements.

In one implementation, a centralized provisioning server provides dynamic functions such as enabling a special access for a set of resources by keeping admission and resource control policies.

In one implementation, the resource control policies are expressed in terms of conditional expressions (also known as statements (ST)).

In one implementation, the Service provisioning method enables the conditional access of resources for different clients based on service level agreements. This centralized provisioning server provides dynamic functions such as enabling a special access for a set of resources by keeping admission and resource control policies. (Note: R-Read, W-Write, D-Delete, C-Client, g-group, P-Priority, Q-QoS level, O-Operation (ex. pause, play, rewind, restart etc. for IP camera)).

```
AC{                                          RC{
        Service ID: 12345                        If C is from g1 allow {R,W} with P1, Q1, 01
        Auth: Basic Auth Support                 If C is from g2 & lg3 {R} with P2,O2
        Count: 10                                If C is from d1 & g1 allow {R, W, D}, P1,O3
        Admission Control: R, W, R/W, D          :
        :                                        :
        :                                        :
    }                                        }
```

Example Admission Control (AC) Policies        Example Resource Control (RC) Policies

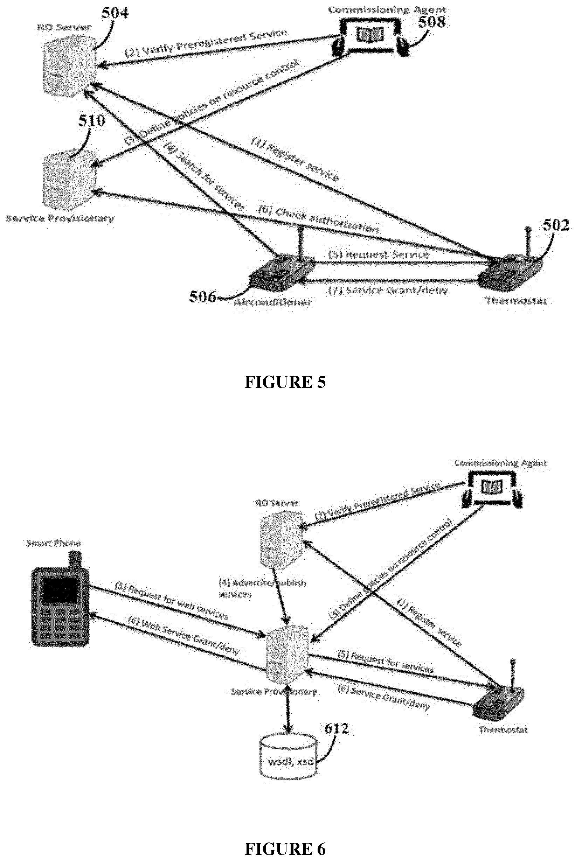

In one implementation, a system architecture when constrained device access the service advertised by other constrained device is as shown in figure **5.** Here, one constrained device (**502**) such as air-conditioner can access the service such as current room temperature advertised by other constrained device (ex. thermostat). This advertised service is to be commissioned by commissioner (**508**), and then it should be set with some admission and resource control policies by provisioning server (**510**). And, finally the service is allowed to advertise its service access from other constrained devices (**506**). Any device (**506**) that is interested in that advertised service, need to do service lookup from RD Server (**504**). Once obtaining the path to the advertised service, the constrained client device (**506**) can request a service to the device (**502**) which hosts the service. Once the incoming request comes from the constrained client device (**506**), the device (**502**) which hosts the service must authorize and provision for conditional access of its service from the provisioning server (**510**). The notification regarding the registered services to the commissioning agent can be sent from the RD server (**504**).

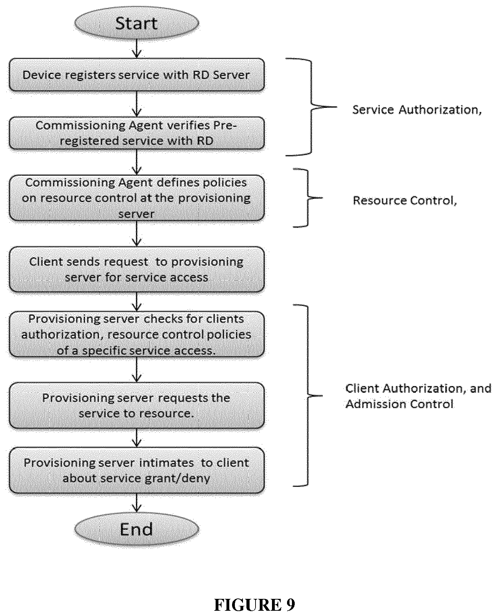

In one implementation, a system architecture when client device access the service advertised by constrained device is as shown in figure **6**, and figure **9** provides the details of the provisions method in accordance with the present invention. For example, the client device (**506**) such as smart phone may access the service (ex. room temperature) advertised by other constrained device (ex. thermostat) (**502**). The client (**506**) can access the service within a home environment or outside the home environment. So, in this scenario, the provisioning server (**510**) maintains the service as a web service. This advertised service is to be commissioned by commissioner (**508**), then to be set with some admission and resource control policies by provisioning server (**510**). And, finally the service is allowed to advertise its access from the client devices (**506**). Any client (**506**) that wishes to access this web service looks for corresponding operations provided from the provisioning server (**510**).

However, the implementation depends on how WSDL files are provided for the corresponding web service. WSDL is an XML based service description for endpoints in constrained environment. These files for each device that hosts a specific web service must be deployed before publishing the service at the provisioning server. Any client that implements to access this web service must look for those files of device at the URL of provisioning server, and then need to implement the web service with the provided methods of hosted service. Once the incoming request comes from the client device, the provisioning server must authorize and provision for conditional access of resource. Then, the provisioning server should get the service from the hosted device and relay the response back to client based on service access level.

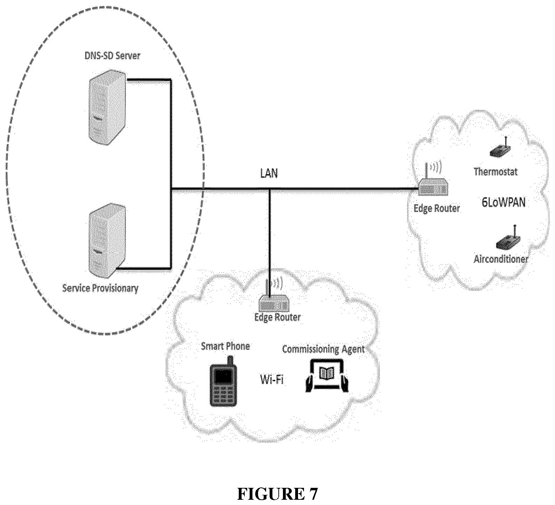

In one implementation, a network topology of the constrained device intercommunicating within the constrained network is as shown in figure 7. The constrained devices such as but not limited to thermostat, Air-conditioner may use small memory constrained sensors/actuators for simple services such as cooling/heating the room or just to measure the current room temperature. These memory constrained embedded devices may implement the **6**LoWPAN stack such as uIP (provided by Contiki), and provide access for communication to other external queries from client devices such as smart phone which typically implements rich stack TCP/IP. Even though the RD server (**504**) or Provisioning server (**510**) are shown as separate servers in the LAN as given in figure **7**, these can be hosted on a single server running two different processes. On the other hand, these specific operations can be implemented separately as a third party and to be used at the commissioning agent. The lower level communication technology can be implemented either through Bluetooth (BT) or near field communication (NFC) to verify the devices unique ID (for ex. using MAC). Even though the present document discusses about **6**LoWPAN based sensor network, it can be easily moved to any other technology such as Zigbee/BLE/Wireless HART without any changes in the architecture or design, because the present document abstracted the communication networks with their edge routers.

Accordingly, in one implementation, the present invention provides a system for provisioning at least one admission control policy and/or at least one resource control policy to at least one service in a network, said network having at least one constrained device (**502**) providing said service registered with at least one resource discovery device (**504**), and at least one client device (**506**) accessing said service. The system comprises at least one commissioning device (**508**) and at least one provisioning device (**510**). The commissioning device (**508**) is configured to perform a domain lookup in said resource discovery device, obtain a specific domain and a specific group of services to which said service is categorized, and verify at least one service pre-registered with said resource discovery device to obtain at least one service information including at least one pre-registered service along with associated device identification (ID). The provisioning device (**510**) is configured to receive said service information from said commissioning device, create at least one service identification (ID) against said service information received, and transmit said service identification (ID) to said commissioning device. The commissioning device (**508**), on receipt of said service ID is configured to create said admission control policy and/or said resource control policy for said service ID; and on receipt of at least one request, from said client device to access said service, lookup for service ID associated with said service in said provisioning device. The client device (**506**) is granted / denied access for said service, based on said admission control policy and/or said resource control policy.

In one implementation, the present invention provides a system for provisioning at least one admission control policy and/or at least one resource control policy to at least one service in a network, said network having at least one constrained device (**502**) providing said service registered with at least one resource discovery device (**504**), at least one client device (**506**) accessing said service registered on said resource discovery device (**504**), and at least one commissioning device (**508**) configured to verify said constrained device (**502**) providing said service. The system comprises at least one provisioning device (**510**) configured to obtain at least one service information including at least one pre-registered service along with associated device identification (ID) from said commissioning device (**508**), create at least one service identification (ID) against said service information received, create said admission control policy and/or said resource control policy for said service ID. On receipt of at least one request, from said client device (**506**), to access said service, the client device lookup for service ID associated with said service in said provisioning device; and thereby grant / deny access for said service, based on said admission control policy and/or said resource control policy, to said client device.

In one implementation, the present invention provides an apparatus (**800**) for provisioning at least one admission control policy and/or at least one resource control policy to at least one service in a network, said network having at least one constrained device (**502**) providing said service registered with at least one resource discovery device (**504**), at least one client device (**506**) accessing said service registered on said resource discovery device (**504**), and at least one commissioning device (**508**) configured to verify said constrained device (**502**) providing said service.

Although the present subject matter is explained considering that the apparatus (**800**) for provisioning at least one admission control policy and/or at least one resource control policy to at least one service in a network, it may be understood that the apparatus (**800**) may also be implemented in a variety of computing systems, such as a laptop computer, a desktop computer, a notebook, a workstation, a mainframe computer, a server, a network server, and the like. It will be understood that the apparatus (**800**) may be accessed by multiple users through one or more user devices (not shown) or applications residing on the user devices. Examples of apparatus (**800**) may include, but are not limited to, a portable computer, a personal digital assistant, a handheld device, and a workstation, routers, servers. The apparatus (**800**) are communicatively coupled to the other devices (**502**, **506**, and **508**) through a network (not shown).

In one implementation, the network may be a wireless network, a wired network or a combination thereof. The network can be implemented as one of the different types of networks, such as intranet, local area network (LAN), wide area network (WAN), the internet, and the like. The network may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network may include a variety of network devices, including routers, bridges, servers, computing devices, storage devices, and the like.

In one implementation, the apparatus (**800**) may include at least one processor (**802**), an input/output (I/O) interface (**804**), and a memory (**806**). The at least one processor (**802**) may be implemented as one or more microprocessors, microcomputers, microcontrollers, digital signal processors, central processing units, state machines, logic circuitries, and/or any devices that manipulate signals based on operational instructions. Among other capabilities, the at least one processor (**802**) is configured to fetch and execute computer-readable instructions stored in the memory (**806**).

The I/O interface (**804**) may include a variety of software and hardware interfaces, for example, a web interface, a graphical user interface, and the like. The I/O interface (**804**) may allow the apparatus (**800**) to interact with a user directly or through the client devices (not shown). Further, the I/O interface (**804**) may enable the apparatus (**800**) to communicate with other computing devices, such as web servers and external data servers (not shown). The I/O interface (**804**) can facilitate multiple communications within a wide variety of networks and protocol types, including wired networks, for example, LAN, cable, etc., and wireless networks, such as WLAN, cellular, or satellite. The I/O interface (**804**) may include one or more ports for connecting a number of devices to one another or to another server.

The memory (**806**) may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory (**804**) may include modules and database (**816**).

The modules include routines, programs, objects, components, data structures, etc., which perform particular tasks or implement particular abstract data types.

In one implementation, the modules may an obtaining module (**808**), a creation module (**810**), a lookup module (**812**), and an access module (**814**). The obtaining module is configured to obtain at least one service information including at least one pre-registered service along with associated device identification (ID) from said commissioning device. The creation module is configured to create at least one service identification (ID) against said service information received, and create said admission control policy and/or said resource control policy for said service ID. The lookup module is configured to lookup for service ID associated with said service in said provisioning device, on receipt of at least one request, from said client device, to access said service. The access module is configured to grant / deny access for said service, based on said admission control policy and/or said resource control policy, to said client device.

In one implementation, the modules may an obtaining module (**808**), a creation module (**810**), a lookup module (**812**), and an access module (**814**). The obtaining module may be configured to obtain at least one verified service information associated with at least pre-registered service provided by at least one resource. The creation module may be configured to create at least one service registry holding the verified service information obtained; create at least one service identification (ID) against the service registry created; and create at least an admission control policy and/or at least a resource control policy for the service ID created. The lookup module, on receipt of at least one request from at least one client device to access the services, may be configured to lookup for services provided by the resources. The access module, based on availability of the service requested by the client device, may be configured to grant admission to access the service provided by the resource, based on the admission control policy and/or the resource control policy.

In one implementation, said admission control policy is at least one of read (R), write (W), read/write (R/W), delete (D), number of simultaneous connection on a resource, or any combination thereof.

In one implementation, said resource control policy is a conditional access of a service, and/or quality of service agreements/parameters based on priority levels set for said client device and depending on at least one application used by said client device.

In one implementation, said quality of service agreements/parameters is at least one of availability, reliability, serviceability, data accuracy, aggregation delay, coverage, fault tolerance, network lifetime or any combination thereof, associated with said network.

In one implementation, said quality of service (QoS) agreements/parameters are categorized in at least one group, at least one priority, at least one class, and at least one permission.

In one implementation, said conditional access is at least one conditional statement defining said resource control policy, selected from: if a client belongs to a G1 then it is allowed with permissions {R, R/W, U}, priority {P1}, QoS {Q1}, and operations {turn it up, read}; else if the client belongs to a G2 then it is allowed with permissions {R, W, R/W}, priority {P3}, QoS {Q2}, and operations {turn it up, read}; else if the client belongs to a G3 then it is allowed with permissions {D}, priority {P2}, QoS {Q3}, and operations {turn it down}; or the client with priority {P1}, QoS {Q1}, operations {turn it up, turn it down, read}, and allow only with permissions {R} in a G1; permissions {R, R/W, D} in a G2; and permissions {D} in a G3; or the client with priority {P1}, QoS {Q1}, and allow with permissions {R}, operations {read} in G1; allow with permissions {R, R/W, D}, operations {turn it up, turn it down, read} in G2; and allow with permissions {D}, operations {turn it down} in G3; or any combination thereof; Where, the priorities for different groups are as {group 1 (G1), group 2 (G2), group 3 (G3)} => {priority 1 (P1), priority 3 (P3), priority 2 (P2)}.

In one implementation, said service information comprises at least one of device identification, a group in which said device categorized, a domain detail, a type of device, a device IP, or any combination thereof.

In one implementation, on receipt of said request, from said client device, to access said service, said client device is configured to: lookup for all the service information hosted by all constrained devices in said network; search for domain for specific service, service information associated said specific services and path associated with said specific services.

In one implementation, said apparatus is configured to store said service information in the form of a web service in at least one database (**816**).

In one implementation, said apparatus is configured to store said service information in the form of a web service in a Web Services Description Language (WSDL) format in at least one database (**816**).

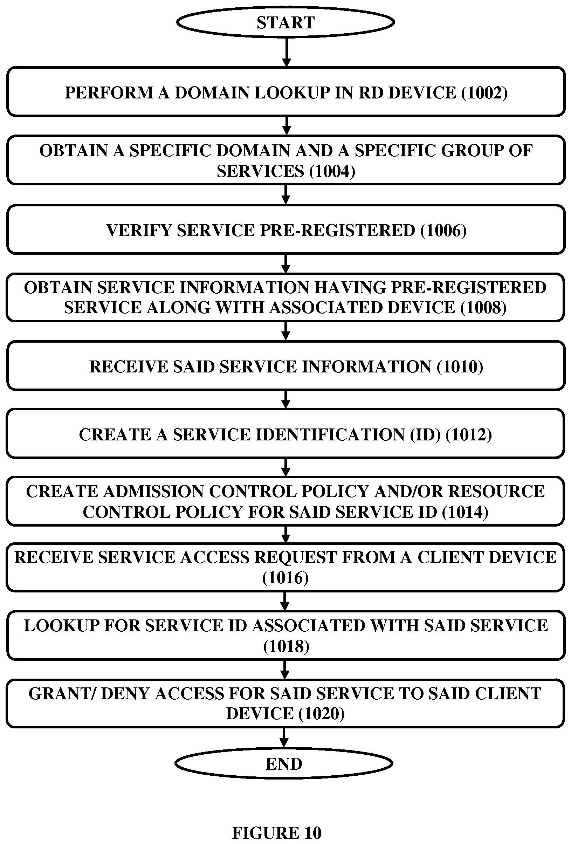

Figure **10** illustrates a method for provisioning at least one admission control policy and/or at least one resource control policy to at least one service in a network, in accordance with an embodiment of the present subject matter. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method or alternate methods. Additionally, individual blocks may be deleted from the method without departing from the protection scope of the subject matter described herein. Furthermore, the method can be implemented in any suitable hardware, software, firmware, or combination thereof. However, for ease of explanation, in the embodiments described below, the method may be considered to be implemented in the above described systems and apparatuses.

In one implementation, the major steps involved in the present invention are as given below:

1. Register Services
2. Verify pre-registered services
3. Define policies on resource controls
4. Search for services by devices
5. Services request and response

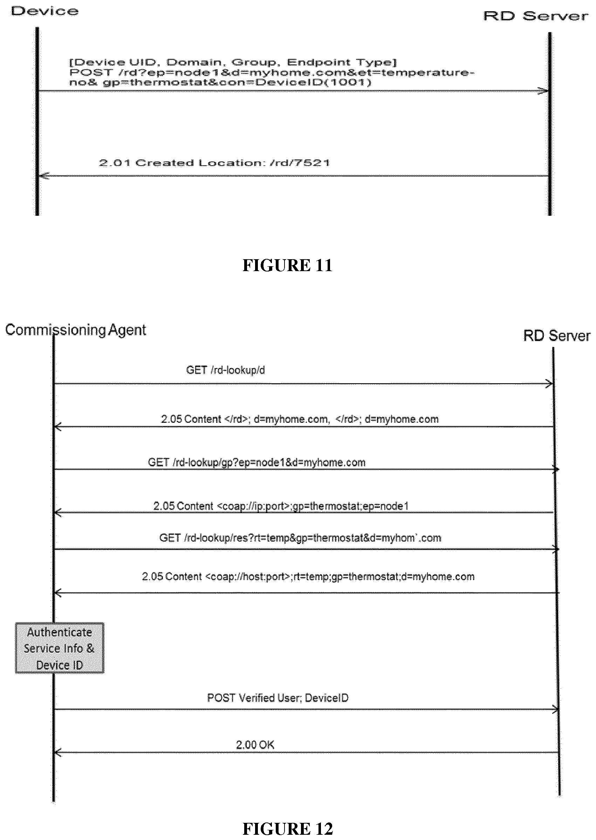

**Register Service:** The constrained device which hosts the service must register its service with the RD server using its unique identifier (for ex. MAC id, UDDI registry etc.) and IP address as shown in figure **11**. The device must send a POST request for registering its service. Once the service has been registered with the RD server, the RD server may notify the registered information of a device (for ex., the unique identifier and device name) to a commissioning agent.

**Verify pre-registered service:** The commissioning agent must verify any pre-registered service with the RD server as shown in figure **12**. The commissioning agent sends a GET request for domain lookup. Once obtaining the specific domain, it must look for the group to which the service belongs. Once obtaining the specific domain and group, it must send a service look up with the RD server for the registered service. Once obtaining the service information about a specific device, the commissioning agent must verify the registered service. This service information is later used to create service registry in the provisioning server as explained in the following section. The example service information (denoted as SRV) looks like as shown below:

```
SRV {
    Name: Node1
    Group: Thermostat
    Domain: myhome.com
    Type: Temperature node
    Device ID: 1001
    }Device IP: <host:port>
```

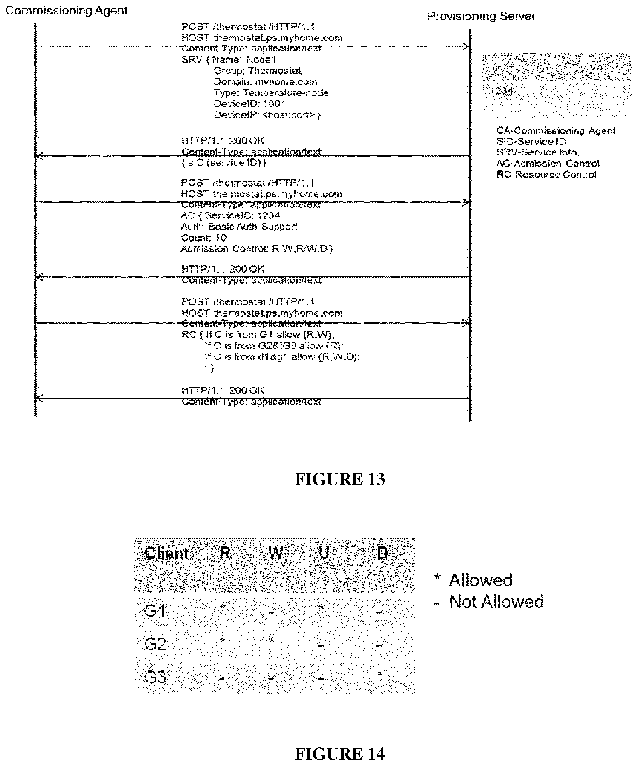

**Define policies on resource control:** Once the hosted service has been verified by commissioning agent (CA), the CA must create a service registry with the provisioning server as explained in figure **13**. The provisioning server should send a service ID as a response back to the commissioning agent after creating the service entry. This service ID can be later used by the commissioning agent to permanently DELETE the service entry (if required). The commissioning agent must create some admission control policies such as read (R), write (W), read/write (R/W), delete (D), number of simultaneous connection on resource etc. on the registered service. Once the admission control policies has been set on a specific device, the resource control policies such as conditional access of a service, quality of service agreements (based on the priority levels set for clients) can be set on that registered service. These conditional access on service can be implemented with simple conditional statements as explained in subsection resource control (for ex. "client (c) can access service with only read (R), write (W) permissions if it only belongs to group (g)"). The example admission control and resource control policies are as shown below:

```
AC {
    Service ID: 12345
    Auth: Basic Auth Support
    Count: 10
    Admission Control: R, W, R/W, D
```

```
: : }
RC {
    If C is from g1 allow {R,W}
    If C is from g2 & !g3 {R}
    If C is from d1 & g1 allow {R, W,
D}
```

}**Resource Control:** Resource control policies for constrained devices are expressed in terms of conditional expressions as explained in the example above. Consider a scenario where we define the client (who accesses the resource) in terms of groups/levels. For example in a typical home building, we assign each floor as a group. Suppose for a three floor building, the clients such as mobile phone/air conditioner can belong to any of the floor within a building. And we allow various permissions for the clients according to the group it belongs to, as specified in figure **14**.

In one implementation, suppose, the priorities for different groups as C = {G1, G2, G3} => {P1, P3, P2} are assigned. Moreover, if different QoS classes for clients are assigned, depending on the applications they use, it is required to control QoS policies in resource control. QoS may be defined in terms of various parameters such as {availability, reliability, serviceability, data accuracy, aggregation delay, coverage, fault tolerance, network lifetime} in wireless sensor networks. It is assumed that based on these parameters, QoS is defined in terms of various classes such as {Q1, Q2, Q3}, then it is required that some of the clients can make some pre-level agreements on QoS requirement for their applications either based on the groups it belongs to or based on the priority of the clients request (Suppose, C = {Q1, Q2, Q3}). Once defining the groups, its priorities, QoS classes, and permissions, then the conditional statements which define the resource control policies can be defined as follows:

ST1: If the client belongs to G1 then it is allowed with permissions {R, R/W, U}, priority {P1}, QoS {Q1}, and operations {turn it up, read}; else if the client belongs to G2 then it is allowed with permissions {R, W, R/W}, priority {P3}, QoS {Q2}, and operations {turn it up, read}; else if the client belongs to G3 then it is allowed with permissions {D}, priority {P2}, QoS {Q3}, and operations {turn it down}.

ST2: Allow the client with priority {P1}, QoS {Q1}, operations {turn it up, turn it down, read}, and allow only with permissions {R} in G1; permissions {R, R/W, D} in G2; and permissions {D} in G3.

ST3: Allow the client with priority {P1}, QoS {Q1}, and allow with permissions {R}, operations {read} in G1; allow with permissions {R, R/W, D}, operations {turn it up, turn it down, read} in G2; and allow with permissions {D}, operations {turn it down} in G3.

It may be understood by the person skilled in that art that, the above conditional statements are few examples on how to define the conditional statements, the statements can be defined on any manner based on the resource control policies we would like to achieve.

In order to understand the above statements in better way, the above statements may be better explained in plain semantic notation (a) as below, and the corresponding JSON representations (b) for message exchange in explained below:

```
C
{
    G1
    {
        Allow {R, U}
        Priority {P1}          "[
        QoS {Q1}               "C":{"G1 ":{"Allow":"R,U","Priority": "P1","QoS":"Q1","Operations":"turn it up,read"},
        Operations {turn it
up, read}
    }
    G2                         "G2":{"Allow":"R,W","Priority":"P3", "QoS":"Q2","Operations":"turn it up, read"},
    {
        Allow {R,W}
```

(continued)

```
        Priority {P3}          "G3":{"Allow":"D","Priority":"P2", "QoS":"Q3","Operations":"turn it down"}}
        QoS {Q2}
        Operations {turn it up, read}
    }                          ]"
G3                             (b)
{
        Allow {D}
        Priority {P2}
        QoS {Q2}
        Operations {turn it down}
    }
}
        (a)


C
{
    Priority {P1}
    QoS {Q1}              "[
    Operations {turn      "Priority":"P1","QoS":"Q1", "Operations":"turn it up, turn it
it up, read}
    G1
    {
        Allow {R}
    }                     down, read", "C":{"G1":{"Allow":"R"}, "G2":{"Allow":"R,W,D"}, "G3":{"Allow":"D"}}
    G2
    {
        Allow {R,W,
D}
    }                     ]"
    G3
    {
        Allow {D}
    }
}
        (a)                           (b)
C
{
    Priority {P1}         "[
    QoS {Q1}              "Priority":"P1","QoS":"Q1", "C":{"G1":{"Allow":"R", "Operations":"read"}, "G2":{"Allow":"R,W,
    G1                    D","Op erations"
    {
        Allow {R}
        Operations {read}
    }
```

(continued)

```
G2                      :"turn it up, turn it down, read"
    {
        Allow {R,W,
D}
        Operations      },
    {turn it up,
turn it down, read}     "G3":{"Allow":"D","Operati ons":
    }
G3                      "turn it down"}}
    {                   ]"
        Allow {D}
        Operations
{turn it down}
    }
}
        (a)                     (b)
```

In one implementation, it may be understood that the QoS parameters in wireless sensor networks may vary depending on the application domain. So, it may be to the service provider to decide what kind of QoS parameters to consider, and derive the QoS classes and Groups who utilizes the provisioning server. A simple method for deriving QoS classes for sample QoS parameters such as {Availability (A), Reliability (R), Serviceability (S), Data Accuracy (DA), Delay (D), Coverage (C), Lifetime (L)}, is defined as:

$$Qn=aA+rR+sS+pDA+dD+cC+lL$$

Where {a,r,s,p,d,c,l} are weights between {0-1} which vary depending upon QoS classes to be defined. Suppose service provider defines weights as {Low (0), Medium (0.5), High (1)}, and QoS class Q1 as more delay tolerant but needs more reliability, then Q1 is defined as:

$$Q1=0.5*A+1*R+0.5*S+0.5*DA+0*D+0.5*C+0.5*L$$

Similarly, QoS class Q2 is defined as more delay sensitive, then Q2 is defined as:

$$Q2=0.5*A+0.5*R+0.5*S+0.5*DA+1*D+0.5*C+0.5*L$$

The above QoS parameter can be estimated using standard well-known procedures for example,

$$Availability=Mean\_Time\_Between\_Failure/(Mean\_Time\_Between\_Failure+Mean\_Time\_To\_Repair);$$

and

$$Reliability=1-(t/Mean\_Time\_Between\_Failure), t\text{-time period}.$$

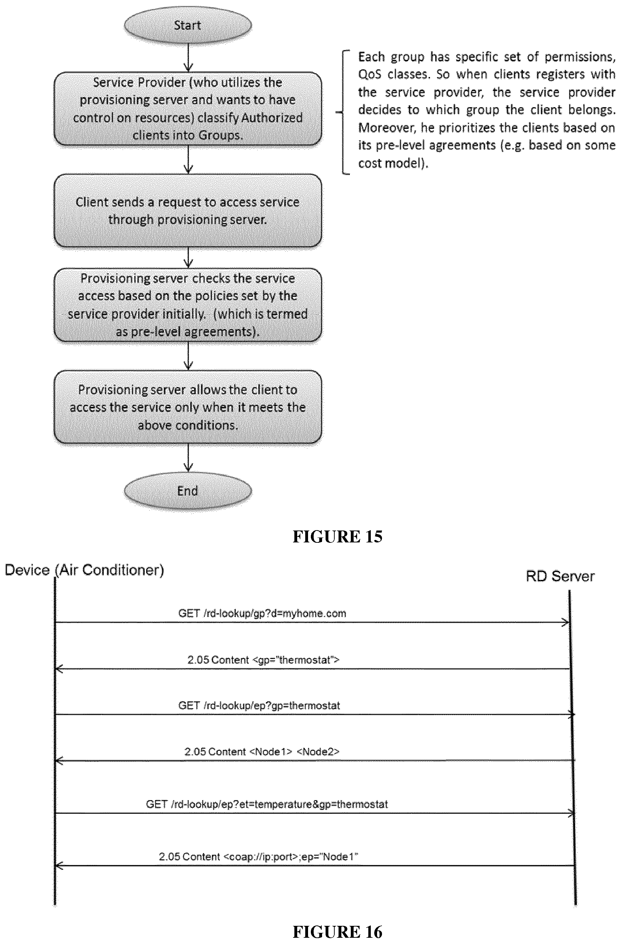

In one implementation, once the service provider classifies the QoS classes, then he can use different mappings among groups with QoS Classes. Suppose, group G1 only provides Q1, group G2 provides {Q1, Q2}. And the client which uses a specific service is defined as Group G1, and then the client can be provided only with assurance of QoS Q1 to access that particular service. Moreover, before accessing the service, the client is checked with its authorization permissions which were set specific to a group (already mentioned in the IDF). A step wise explanation for Group and QoS classification for clients is as shown in figure **15**.

In one implementation, the conditional statements can be used to set resource control policies. For example, if nth client belongs to mth group then the conditional expression is expressed as follows:

```
Cn
 {Gm
     {
     Allow {x1,...xk}€{R,W,R/W,U,D}; k is number of permissions
allowed for client
     Priority {p1,p2,....pr}; r is total priority classes of client
     QoS {Q1,Q2,.....Qs}; s is total QoS classes allowed for client
     Operations {O1,O2,....... On};n is total possible operations for
client
 } }
```

**Search for services by device:** Any client device (as explained for scenario **2** explained in figure **6**) may interact with the provisioning server and looks for deployed services by devices. Moreover, the provisioning server may verify the complete authorization, admission, and resource control of any device's services. Whereas, if any other constrained devices (ex. air conditioner) searches for services hosted by other constrained device (as explained for scenario **1**) must interact with the RD server as shown in figure **16**. Here, initially the device queries for all services that are hosted by other devices, then it searches within the domain for specific service, its SRV info, and path to the hosted service.

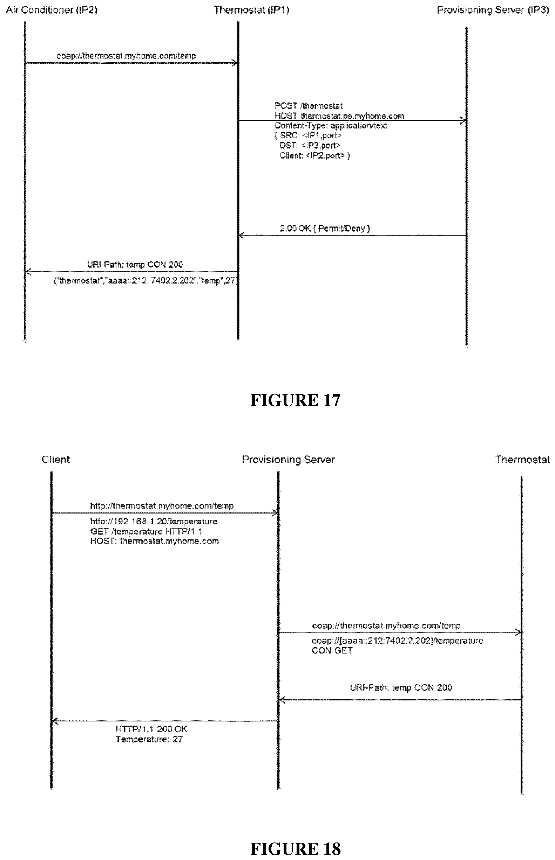

**Service request and response:** In scenario **1** (as shown in figure **5**), service request and response must use CoAP based communication to access the service as shown in figure **17.** Suppose, the constrained client device (for ex. air-conditioner) want to access the service hosted by another constrained device (for ex. thermostat), then the client device must send a coap based GET request to thermostat. Then, this device (thermostat) should send a POST request to provision this service request with the provisioning server by sending clients <IP:port>. Based on the clients <IP:port>, the provisioning server must find the client (ex. air-conditioner) details such as service information, group, domain, and type details. Once the client is identified, the provisioning server must check for authorization, admission and resource control policies of hosted service (ex. thermostat). Once the service request is authorized to access then the URI-Path for hosted service along with the value is sent as a coap response to client device (air conditioner). Here, the request is conditional i.e. based on the resource control policies of a resource (such as thermostat) for a client (air-conditioner), the permissions are given to access the resource.

Service request and response in scenario **2** (as shown in figure **6**), uses simple http based communication to access the service from the PS is shown in figure **18**. Provisioning Server then sends a coap based GET request to the ultimate device that hosts service. Before sending this request to the actual device for service, PS authorizes the service request. Once, the service request is authorized to access, and then the URI-path for hosted service along with the value is sent as HTTP response to client device.

Sometimes it is required to provide the sensor services over the Internet when the client is outside the home environment (for ex. from office using mobile Internet or using cloud). So to provide the sensor services in the web world, it is essential to represent to the sensor services in a web service model. WSDL is a XML based communication standard to represent the services over Internet by making the client independent of their platforms and implementation technologies, which is widely used due to its great tool support. A client connecting to a web service can read the WSDL to determine what functions is available regarding the sensor service over Internet. Any special data types are embedded in the WSDL file in the form of XSD. The client can use SOAP to actually call one of these functions provided by the sensor device which are listed in WSDL file.

So in scenario **2**, the request/ response to sensor services follows the web service model. This web service model can implement RESTful or SOAP based frameworks for accessing/publishing the web service. Web linking within constrained environments is expressed in a restful way; where as a general way to represent a resource outside the constrained environments is based on SOAP. The sample request and response code for these frameworks are given below. WSDL is an XML based service description for endpoints in constrained environment and is being used by SOAP protocol outside the constrained environment, where this WSDL representation allows an abstract way of representing the endpoint services regardless of what message formats or network protocols are used to communicate.

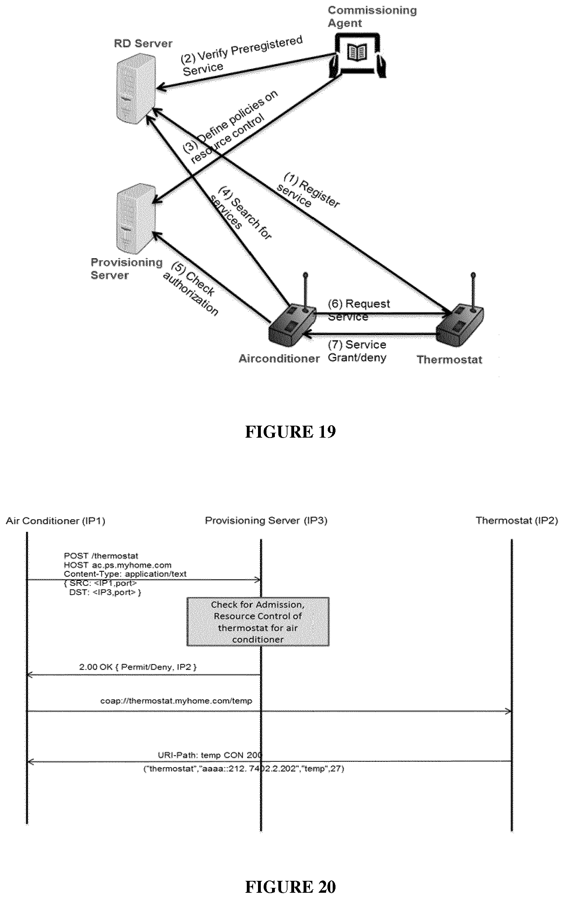

In one scenario **3**, any device that wishes to access service from other constrained device must verify its accessibility from the provisioning server before sending request to the constrained device is shown in figure **19**, and the call flow for the same is as shown in figure **20.** Because, for example in the scenario **1** (figure **5**), where multiple requests sent to thermostat from various other devices then it becomes more overloaded in terms of processing power. Moreover, for each request the thermostat must verify client's accessibility with the provisioning service which may increase the delay in sending response to the clients. So, by using this scenario **3** (figure **19**), the constrained devices can operate efficiently in terms of processing power, faster response time, and network efficiency. The constrained device accessing the service from other constrained device while requesting device verifying the admission and resource policies for service accessibility from the PS is as shown in figure **19**.

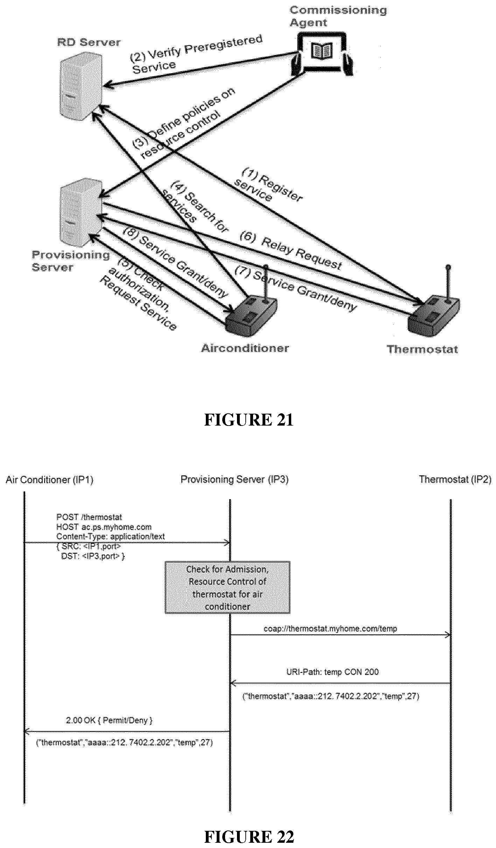

In scenario 4, any device that wishes to access service from other constrained device must verify its accessibility from the provisioning server before sending request to the constrained device is shown in figure **21**, and the call flow for the same is as shown in figure **22**. Moreover, in contrast to scenario **3**, the provision server itself relay the request on behalf of any constrained device to other constrained device that hosts the service and sends the response back to the requested device. This protects the constrained devices from hazardous conditions, and improves the security of devices along with the advantages points mentioned in the scenario 3. The constrained device accessing the service from other constrained device via PS is as shown in figure **21**, while figure **22** shows the call flow.

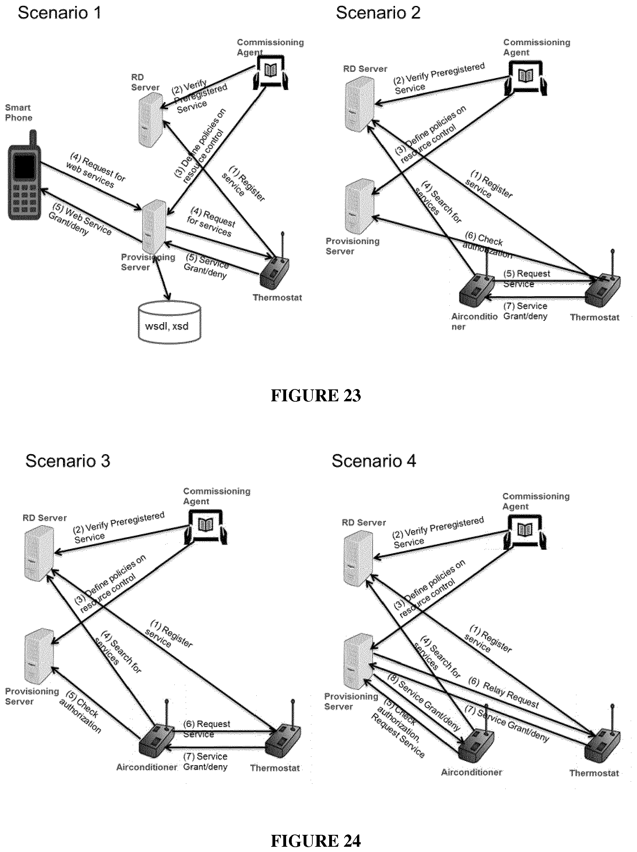

In one implementation figure **23** and figure **24** shows all the four scenarios as explained in the present invention as an exemplary embodiment.

In one implementation, as shown in figure **10**, a method for provisioning at least one admission control policy and/or at least one resource control policy to at least one service in a network, said network having at least one constrained device providing said service registered with at least one resource discovery device, at least one client device accessing said service registered on said resource discovery device, and at least one commissioning device configured to verify said constrained device providing said service is disclosed.

At block **1002,** a domain lookup is performed on the resource discovery device by provisioning server or the apparatus.

At block **1004,** the provisioning server or the apparatus obtains at least one service information including at least one pre-registered service along with associated device identification (ID) is obtained from said commissioning device.

At block **1006**, a specific domain and a specific group of services to which said service is categorized is obtained.

At block **1008**, at least one service pre-registered with said resource discovery device to obtain (**1008**) at least one service information including at least one pre-registered service along with associated device identification (ID) is verified.

At block **1010**, service information from said commissioning device is received.

At block **1012**, at least one service identification (ID) against said service information received is created.

At block **1014**, said admission control policy and/or said resource control policy for said service ID are created.

At block **1016**, at least one request to access said service is received from said client device.

At block **1018**, a lookup for service ID associated with said service in said provisioning device is performed.

At block **1020**, access for said service to said client device based on said admission control policy and/or said resource control policy is granted / denied.

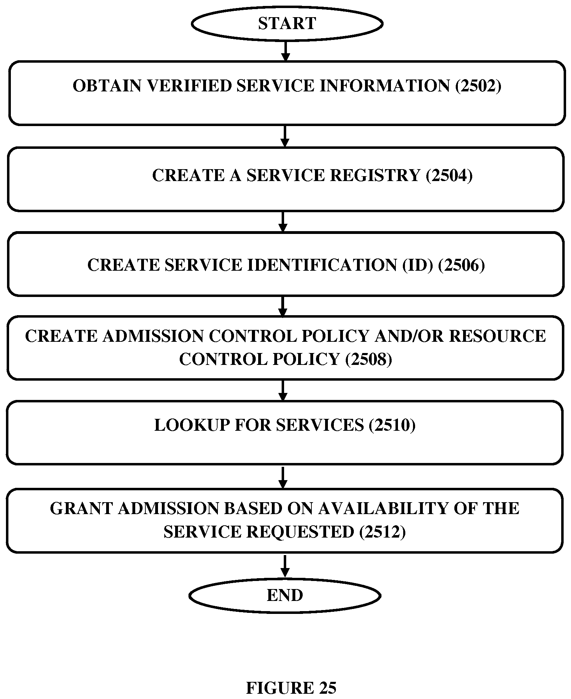

Figure **25** illustrates a method for authorizing at least one client device to access at least one service provided by at least one resource, and managing access of the resource by providing conditional admission and/or resource control on the service provided by the resource based service level agreement, in accordance with an embodiment of the present subject matter.

At step **2502**, at least one verified service information associated with at least pre-registered service provided by at least one resource is obtained.

At step **2504**, at least one service registry holding the verified service information obtained is created.

At step **2506**, at least one service identification (ID) against said service registry is created.

At step **2508**, at least an admission control policy and/or at least a resource control policy for the service ID is created.

At step **2510**, on receipt of at least one request from at least one client device to access the services, the services provided by the resources is looked up.

At step **2512**, based on availability of the service requested by the client device, to access the service provided by the resource, the admission is granted to access the services based on the admission control policy and/or the resource control policy.

In one implementation, the method may receive the service information associated with the pre-registered service provided by the resource against the details of all the services provided by all the resources in a network stored in at least one database, from at least one device, the verified service information after verifying, by the device, and thereby obtain a domain information and at least one group information in which the resource is categorized from the database.

In one implementation, the method may store the verified service information in at least one database in the form of a web service.

In one implementation, the verified service information in at least one database may be stored in a web services description language (WSDL) format.

In one implementation, on receipt of the request to access the services, the method may lookup for all the service registry stored in the apparatus, each resource in the network comprises a service registry holding verified service information, and search, based on domain of the service or the service registry, or path associated with the service, or any combination thereof, to availability of the service requested by the client device.

In one implementation, as the present invention may be implemented in a wireless sensor network, the present invention may also be used for providing services such as:

1. Home Automation
2. Building Automation
3. Industrial Automation
4. Defense applications
5. Mining applications
6. Process Control Systems

In one implementation, the present invention may be implemented as a software product that implements service provisioning method of configuring policies for conditional access and resource control, which can be deployed either as a special server known as provisioning server or it can be integrated with any other centralized server such as resource directory.

In one implementation, the present invention may be implemented as a complete software solution for service provisioning along with commissioning procedure for constrained devices.

In one implementation, the present invention may be implemented as method and system for providing service provisioning in constrained environment.

In one implementation, the present invention may be implemented as a method to provide dynamic configuring policies for admission and resource control of constrained devices along with the commissioning procedure.

In one implementation, the present invention may be implemented as a method to enable dynamic resource control for service level agreements/negotiations.

In one implementation, the present invention may be implemented as a method to support conditional access for resources based on client's requests.

In one implementation, the present invention may be implemented as method to combine service commissioning with service provisioning to provide complete end-to-end authorization.

Apart from what is explained above, the present invention also include the below mentioned advantages:

**More Secure and Safer:** Unintended users may access service and cause damage to sensor device. An authentication of client devices based on secure keys alone is not sufficient to grant access for resources in critical sensor network applications. The proposed solution provides conditional access of services of resource for different clients based on service level agreements/negotiations provides better resource usage from hazards conditions. Moreover, seamlessly integrating service commissioning with service provisioning provides more security.

**QoS Improvement:** Sensor network applications have a variety of quality of service requirements depending on the nature of the application itself. For ex: Some of the sensor applications have data that urgently need to be delivered such as hospital wireless sensor networks (HWSN), there needs to be a method to trade of between network usage and QoS. The solution provided here allows dynamic resource control mechanism based on the service level agreements between clients and resources which improve the QoS of sensor network applications.

**Maximize Device Lifetime:** As the sensor devices are constrained in terms of processing power, memory, it is necessary to provision these devices (to be accessed by clients) based on its thresholds and limited access capabilities. So the solution provided here allows the sensor devices to be controlled based on their threshold limits, and limited access capabilities. This ultimately increases the sensor devices lifetime.

**Improve Network Throughput:** In case of congested network, controlling the admission of resource access, improves the network bandwidth usage. The dynamic admission, and resource control policies improves the network bandwidth usage based on network conditions.

**Easy Maintenance:** Dynamic admission and resource control makes the user more comfortable to access the service in largely deployed sensor devices (which eliminates the unnecessary overhead in maintenance of resource changes). It is easy to monitor and observe connectivity statistics of services.

A person of ordinary skill in the art may be aware that in combination with the examples described in the embodiments disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiment of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A system for resource management in a network comprising:

resources in the network, at least one client device in the network, at least one device in the network, at least one database in the network; and a processor (802); and
a memory (806) coupled to the processor for executing a plurality of modules present in the memory, the plurality of modules comprising:

an obtaining module (808) configured to obtain at least one verified service information associated with at least one pre-registered service provided by at least one resource;
a creation module (810) configured to:

create at least one service registry holding the verified service information obtained;
create at least one service identification, ID, against the service registry created; and
create at least an admission control policy and/or at least a resource control policy for the service ID created;

a lookup module (812), on receipt of at least one request from the at least one client device to access the pre-registered service, configured to lookup for the pre-registered service provided by the resource; and
an access module (814), based on availability of the pre-registered service requested by the client device, configured to grant admission to access the pre-registered service provided by the resource, based on the admission control policy and/or the resource control policy;
wherein, the verified service information is received from the at least one device configured to verify service information associated with the pre-registered service provided by the resource against details of all services provided by all the resources in the network stored in the at least one database, and thereby obtaining, from the at least one database, a domain information and at least one group information in which the resource providing the pre-registered service is categorized.

2. The system as claimed in claim 1 is characterized for authorizing at least one client device to access at least one service provided by at least one resource, and access management of the resource by providing conditional admission and/or resource control on the service provided by the resource based service level agreement dynamically.

3. The system as claimed in claim **1**, wherein the verified service information is stored in at least one database in the form of a web service.

4. The system as claimed in claim **1**, wherein the verified service information is stored in at least one database in the form a web service in a web services description language, WSDL, format.

5. The system as claimed in claim **1**, wherein the admission control policy is at least one of read (R), write (W), read/write (R/W), delete (D), number of simultaneous connection on a resource, or any combination thereof.

6. The system as claimed in claim **1**, wherein the resource control policy is a conditional access of a service, and/or quality of service agreements/parameters based on priority levels set for the client device and depending on at least one application used by the client device.

7. The system as claimed in claim **1**, wherein the service registry comprises at least one of resource identification, a group in which the resource is categorized, a domain detail, a type of resource, a resource IP, or any combination thereof.

8. The system as claimed in claim **1** or **3**, wherein on receipt of the request to access the services, the lookup module is configured to:

   lookup for all the service registry stored in the apparatus, each resource in the network comprises a service registry holding verified service information; and
   search, based on domain of the service or the service registry, or path associated with the service, or any combination thereof, to availability of the service requested by the client device.

9. A method for authorizing at least one client device to access at least one service provided by at least one resource, and managing access of the resource by providing conditional admission and/or resource control on the service provided by the resource based service level agreement, the method comprising:

   obtaining (2502) at least one verified service information associated with at least one pre-registered service provided by at least one resource;
   creating:

      at least one service registry holding the verified service information obtained (2504);
      at least one service identification, ID, against the service registry (2506);
      at least an admission control policy and/or at least a resource control policy for the service ID (2508);

   lookup (2510), on receipt of at least one request from at least one client device to access the pre-registered service, for the pre-registered service provided by the resource; and
   granting (2512) admission, based on availability of the pre-registered service requested by the client device, to access the pre-registered service provided by the resource, based on the admission control policy and/or the resource control policy.
   wherein the method comprises:

      receiving, from at least one device, the verified service information after verifying, by the device, the service information associated with the pre-registered service provided by the resource against details of all services provided by all the resources in a network stored in at least one database, and thereby
      obtaining, from the database, a domain information and at least one group information in which the resource providing the pre-registered service is categorized.

10. The method as claimed in claim **9**, comprises storing the verified service information in at least one database in the form of a web service.

11. The method as claimed in claim **9**, comprises storing the verified service information in at least one database in a web services description language, WSDL, format.

12. The method as claimed in claim **9**, wherein the admission control policy is at least one of read, R, write, W, read/write, R/W, delete, D, number of simultaneous connection on a resource, or any combination thereof.

**13.** The method as claimed in claim **9**, wherein the resource control policy is a conditional access of a service, and/or quality of service agreements/parameters based on priority levels set for the client device and depending on at least one application used by the client device.

**14.** The method as claimed in claim **13**, wherein the quality of service agreements/parameters is at least one of availability, reliability, serviceability, data accuracy, aggregation delay, coverage, fault tolerance, network lifetime or any combination thereof, associated with the network.

**15.** The method as claimed in claim **9** or **10**, wherein on receipt of the request to access the services, the method comprises:

lookup for all the service registry stored in the apparatus, each resource in the network comprises a service registry holding verified service information; and
searching, based on domain of the service or the service registry, or path associated with the service, or any combination thereof, to availability of the service requested by the client device.


**Patentansprüche**

**1.** System zur Ressourcenverwaltung in einem Netzwerk, das Folgendes umfasst:

Ressourcen im Netzwerk, mindestens eine Clientvorrichtung im Netzwerk, mindestens eine Vorrichtung im Netzwerk, mindestens eine Datenbank im Netzwerk und
einen Prozessor (802) und
einen Speicher (806), der zum Ausführen einer Vielzahl von Modulen, die im Speicher vorhanden sind, an den Prozessor gekoppelt ist, wobei die Vielzahl von Modulen Folgendes umfasst:

ein Erhaltungsmodul (808), das dazu ausgelegt ist, mindestens eine verifizierte Dienstinformation zu erhalten, die mit mindestens einem vorab registrierten Dienst verknüpft ist, der von mindestens einer Ressource bereitgestellt wird;
ein Erstellungsmodul (810), das zu Folgendem ausgelegt ist:

Erstellen von mindestens einem Dienstregister, das die erhaltenen Dienstinformationen enthält;
Erstellen von mindestens einer Dienstidentifikation, ID, anhand des erstellten Dienstregisters und
Erstellen von mindestens einer Zulassungssteuerrichtlinie und/oder mindestens einer Ressourcensteuerrichtlinie für die erstellte Dienst-ID;
ein Nachschlagemodul (812), das nach Empfang mindestens einer Anforderung von der mindestens einen Clientvorrichtung zum Zugreifen auf den vorab registrierten Dienst dazu ausgelegt ist, den von der Ressource bereitgestellten vorab registrierten Dienst nachzuschlagen; und
ein Zugriffsmodul (814), das auf Basis der Verfügbarkeit des von der Clientvorrichtung angeforderten vorab registrierten Dienstes dazu ausgelegt ist, auf Basis der Zulassungssteuerrichtlinie und/oder der Ressourcensteuerrichtlinie die Zulassung zum Zugreifen auf den von der Ressource bereitgestellten vorab registrierten Dienst zu gewähren;
wobei die verifizierten Dienstinformationen von der mindestens einen Vorrichtung empfangen werden, die dazu ausgelegt ist, Dienstinformationen, die mit dem vorab registrierten Dienst verknüpft sind, der von der Ressource bereitgestellt wird, anhand von Details von allen Diensten, die von allen Ressourcen im Netzwerk bereitgestellt werden, die in der mindestens einen Datenbank gespeichert sind, zu verifizieren, wodurch von der mindestens einen Datenbank eine Domäneninformation und mindestens eine Gruppeninformation, in der die Ressource kategorisiert ist, die den vorab registrierten Dienst bereitstellt, erhalten werden.

**2.** System nach Anspruch **1** ist durch Autorisieren mindestens einer Clientvorrichtung, auf mindestens einen Dienst zuzugreifen, der von mindestens einer Ressource bereitgestellt wird, und durch Zugriffsverwaltung der Ressource durch dynamisches Bereitstellen einer bedingten Zulassungs- und/oder Ressourcensteuerung an dem Dienst, der durch die ressourcenbasierte Dienstniveauvereinbarung bereitgestellt wird, gekennzeichnet.

**3.** System nach Anspruch **1**, wobei die verifizierten Dienstinformationen in mindestens einer Datenbank in Form eines Webdienstes gespeichert werden.

4. System nach Anspruch **1**, wobei die verifizierten Dienstinformationen in mindestens einer Datenbank in Form eines Webdienstes in einem Webdienstbeschreibungssprachen(WSDL)-Format gespeichert werden.

5. System nach Anspruch **1**, wobei die Zulassungssteuerrichtlinie mindestens eines von Lesen (R), Schreiben (W), Lesen/Schreiben (R/W), Löschen (D), Anzahl von gleichzeitiger Verbindungen an einer Ressource oder jede Kombination davon ist.

6. System nach Anspruch **1**, wobei die Ressourcensteuerrichtlinie ein bedingter Zugriff auf einen Dienst und/oder Dienstgütevereinbarungen/-parameter auf Basis von Prioritätsstufen, die für die Clientvorrichtung eingestellt sind, und mindestens abhängig von einer Anwendung, die von der Clientvorrichtung verwendet wird, ist.

7. System nach Anspruch **1**, wobei das Dienstregister mindestens eines von einer Ressourcenidentifikation, einer Gruppe, in die die Ressource kategorisiert ist, ein Domänendetail, einen Ressourcentyp, eine Ressourcen-IP oder jede Kombination davon umfasst.

8. System nach Anspruch **1** oder **3**, wobei das Nachschlagemodul nach Empfang der Anforderung zum Zugreifen auf die Dienste zu Folgendem ausgelegt ist:

   Nachschlagen nach dem gesamten in der Einrichtung gespeicherten Dienstregister, jede Ressource im Netzwerk umfasst ein Dienstregister, das verifizierte Dienstinformationen umfasst; und
   Suchen auf Basis einer Domäne des Dienstes oder des Dienstregisters oder eines Pfads, der mit dem Dienst verknüpft ist, oder jeder Kombination davon nach einer Verfügbarkeit des von der Clientvorrichtung angeforderten Dienstes.

9. Verfahren zum Autorisieren mindestens einer Clientvorrichtung, auf mindestens einen Dienst zuzugreifen, der von mindestens einer Ressource bereitgestellt wird, und zum Verwalten des Zugriffs der Ressource durch Bereitstellen einer bedingten Zulassungs- und/oder Ressourcensteuerung an dem Dienst, der durch die ressourcenbasierte Dienstniveauvereinbarung bereitgestellt wird, wobei das Verfahren Folgendes umfasst:

   Erhalten (2502) mindestens einer verifizierten Dienstinformation, die mit mindestens einem vorab registrierten Dienst verknüpft ist, der von mindestens einer Ressource bereitgestellt wird;
   Erstellen:

      von mindestens einem Dienstregister, das die erhaltenen Dienstinformationen enthält (2504);
      von mindestens einer Dienstidentifikation, ID, anhand des Dienstregisters (2506);
      von mindestens einer Zulassungssteuerrichtlinie und/oder mindestens einer Ressourcensteuerrichtlinie für die Dienst-ID (2508);
      nach Empfang mindestens einer Anforderung von mindestens einer Clientvorrichtung zum Zugreifen auf den vorab registrierten Dienst Nachschlagen (2510) nach dem von der Ressource bereitgestellten vorab registrierten Dienst und
      Gewähren (2512) auf Basis der Verfügbarkeit des von der Clientvorrichtung angeforderten vorab registrierten Dienstes des Zulassens des Zugriffs auf den von der Ressource bereitgestellten vorab registrierten Dienst auf Basis der Zulassungssteuerrichtlinie und/oder der Ressourcensteuerrichtlinie,
      wobei das Verfahren Folgendes umfasst:
      Empfangen der verifizierten Dienstinformationen von mindestens einer Vorrichtung nach Verifizieren der Dienstinformationen, die mit dem vorab registrierten Dienst verknüpft sind, der von der Ressource bereitgestellt wird, durch die Vorrichtung anhand von Details von allen Diensten, die von allen Ressourcen in einem Netzwerk bereitgestellt werden, die in mindestens einer Datenbank gespeichert sind, und dadurch Erhalten einer Domäneninformation und mindestens einer Gruppeninformation, in der die Ressource, die den vorab registrierten Dienst bereitstellt, kategorisiert ist, von der Datenbank.

10. Verfahren nach Anspruch **9** umfasst das Speichern der verifizierten Dienstinformationen in mindestens einer Datenbank in Form eines Webdienstes.

11. Verfahren nach Anspruch **9** umfasst das Speichern der verifizierten Dienstinformationen in mindestens einer Datenbank in einem Webdienstbeschreibungssprachen(WSDL)-Format.

12. Verfahren nach Anspruch **9**, wobei die Zulassungssteuerrichtlinie mindestens eines von Lesen, R, Schreiben, W,

Lesen/Schreiben, R/W, Löschen, D, Anzahl von gleichzeitiger Verbindung an einer Ressource oder jede Kombination davon ist.

13. Verfahren nach Anspruch **9**, wobei die Ressourcensteuerrichtlinie ein bedingter Zugriff auf einen Dienst und/oder Dienstgütevereinbarungen/-parameter auf Basis von Prioritätsstufen, die für die Clientvorrichtung eingestellt sind, und mindestens abhängig von einer Anwendung, die von der Clientvorrichtung verwendet wird, ist.

14. Verfahren nach Anspruch **13**, wobei die Dienstgütevereinbarungen/Parameter mindestens eines von einer mit dem Netzwerk verknüpften Verfügbarkeit, Zuverlässigkeit, Betriebsbereitschaft, Datengenauigkeit, Aggregationsverzögerung, Abdeckung, Fehlertoleranz, Netzwerklebensdauer oder jede Kombination davon sind.

15. Verfahren nach Anspruch **9** oder **10**, wobei das Verfahren nach Empfang der Anforderung zum Zugreifen auf die Dienste Folgendes umfasst:

Nachschlagen nach dem gesamten in der Einrichtung gespeicherten Dienstregister, jede Ressource im Netzwerk umfasst ein Dienstregister, das verifizierte Dienstinformationen umfasst; und
Suchen auf Basis einer Domäne des Dienstes oder des Dienstregisters oder eines Pfads, der mit dem Dienst verknüpft ist, oder jeder Kombination davon nach einer Verfügbarkeit des von der Clientvorrichtung angeforderten Dienstes.

## Revendications

1. Système pour une gestion de ressources dans un réseau comprenant :

des ressources dans le réseau, au moins un dispositif client dans le réseau, au moins un dispositif dans le réseau, au moins une base de données dans le réseau ; et
un processeur (802) ; et
une mémoire (806) couplée au processeur pour l'exécution d'une pluralité de modules présents dans la mémoire, la pluralité de modules comprenant :

un module d'obtention (808) configuré pour obtenir au moins une information de service vérifiée associée à au moins un service pré-enregistré fourni par au moins une ressource ;
un module de création (810) configuré pour :

créer au moins un registre de services conservant les informations de service vérifiées ayant été obtenues ;
créer au moins une identification de service, ID, contre le registre de services créé ; et
créer au moins une politique de contrôle d'admission et/ou au moins une politique de contrôle de ressources pour l'ID de service créée ;
un module de consultation (812), lors de la réception d'au moins une requête en provenance de l'au moins un dispositif client pour accéder au service pré-enregistré, configuré pour consulter le service pré-enregistré fourni par la ressource ; et
un module d'accès (814), sur la base d'une disponibilité du service pré-enregistré requis par le dispositif client, configuré pour accorder une admission pour accéder au service pré-enregistré fourni par la ressource, sur la base de la politique de contrôle d'admission et/ou de la politique de contrôle de ressources ;
dans lequel, les informations de service vérifiées sont reçues en provenance de l'au moins un dispositif configuré pour vérifier des informations de service associées au service pré-enregistré fourni par la ressource contre des détails de tous les services fournis par toutes les ressources dans le réseau stockés dans l'au moins une base de données, et obtenir de ce fait, en provenance de l'au moins une base de données, une information de domaine et au moins une information de groupe dans laquelle la ressource fournissant le service pré-enregistré est catégorisée.

2. Système tel que revendiqué dans la revendication **1** étant caractérisé pour autoriser au moins un dispositif client à accéder à au moins un service fourni par au moins une ressource, et une gestion d'accès de la ressource en procurant une admission conditionnelle et/ou un contrôle de ressources sur le service fourni par l'accord de niveau de service basé sur la ressource de manière dynamique.

3. Système tel que revendiqué dans la revendication **1**, dans lequel les informations de service vérifiées sont stockées dans au moins une base de données sous la forme d'un service web.

4. Système tel que revendiqué dans la revendication **1**, dans lequel les informations de service vérifiées sont stockées dans au moins une base de données sous la forme d'un service web dans un format de langage de description de services web, WSDL.

5. Système tel que revendiqué dans la revendication **1**, dans lequel la politique de contrôle d'admission est au moins une parmi la lecture (R), l'écriture (W), la lecture/écriture (R/W), la suppression (D), d'un nombre de connexions simultanées sur une ressource, ou n'importe quelle combinaison de celles-ci.

6. Système tel que revendiqué dans la revendication **1**, dans lequel la politique de contrôle de ressources est un accès conditionnel d'un service, et/ou de paramètres/accords de qualité de service basés sur des niveaux de priorité établis pour le dispositif client et dépendant d'au moins une application utilisée par le dispositif client.

7. Système tel que revendiqué dans la revendication **1**, dans lequel le registre de services comprend au moins une identification de ressource, un groupe dans lequel la ressource est catégorisée, un détail de domaine, un type de ressource, un IP de ressource, ou n'importe quelle combinaison de ceux-ci.

8. Système tel que revendiqué dans la revendication **1** ou **3**, dans lequel lors de la réception de la requête pour accéder aux services, le module de consultation est configuré pour :

   consulter l'ensemble du registre de services stocké dans l'appareil, chaque ressource dans le réseau comprenant un registre de services conservant des informations de service vérifiées ; et
   rechercher, sur la base d'un domaine du service ou du registre de services, ou d'un trajet associé au service, ou de n'importe quelle combinaison de ceux-ci, une disponibilité du service requis par le dispositif client.

9. Procédé pour autoriser au moins un dispositif client à accéder à au moins un service fourni par au moins une ressource, et gérer un accès de la ressource en procurant une admission conditionnelle et/ou un contrôle de ressources sur le service fourni par la ressource sur la base d'un accord de niveau de service, le procédé comprenant :

   l'obtention (2502) d'au moins une information de service vérifiée associée à au moins un service pré-enregistré fourni par au moins une ressource ;
   la création :

   d'au moins un registre de services conservant les informations de service vérifiées ayant été obtenues (2504) ;
   au moins une identification de service, ID, contre le registre de services (2506) ;
   au moins une politique de contrôle d'admission et/ou au moins une politique de contrôle de ressources pour l'ID de service (2508) ;
   la consultation (2510), lors de la réception d'au moins une requête en provenance d'au moins un dispositif client pour accéder au service pré-enregistré, pour le service pré-enregistré fourni par la ressource ; et
   l'accord (2512) de l'admission, sur la base d'une disponibilité du service pré-enregistré requis par le dispositif client, pour accéder au service pré-enregistré fourni par la ressource, sur la base de la politique de contrôle d'admission et/ou de la politique de contrôle de ressources,
   le procédé comprenant :

   la réception, en provenance d'au moins un dispositif, des informations de service vérifiées après la vérification, par le dispositif, des informations de service associées au service pré-enregistré fourni par la ressource contre des détails de tous les services fournis par toutes les ressources dans un réseau stockés dans au moins une base de données, et de ce fait
   l'obtention, en provenance de la base de données, d'une information de domaine et d'au moins une information de groupe dans laquelle la ressource fournissant le service pré-enregistré est catégorisée.

10. Procédé tel que revendiqué dans la revendication **9**, comprenant le stockage des informations de service vérifiées dans au moins une base de données sous la forme d'un service web.

11. Procédé tel que revendiqué dans la revendication **9**, comprenant le stockage des informations de service vérifiées dans au moins une base de données dans un format de langage de description de services web, WSDL.

12. Procédé tel que revendiqué dans la revendication **9**, dans lequel la politique de contrôle d'admission est au moins une parmi la lecture, R, l'écriture, W, la lecture/écriture, R/W, la suppression, D, d'un nombre de connexions simultanées sur une ressource, ou n'importe quelle combinaison de celles-ci.

13. Procédé tel que revendiqué dans la revendication **9**, dans lequel la politique de contrôle de ressources est un accès conditionnel d'un service, et/ou de paramètres/accords de qualité de service basés sur des niveaux de priorité établis pour le dispositif client et dépendant d'au moins une application utilisée par le dispositif client.

14. Procédé tel que revendiqué dans la revendication **13**, dans lequel les paramètres/accords de qualité de service sont au moins un parmi la disponibilité, la fiabilité, la facilité de maintenance, la précision des données, le retard d'agrégation, la couverture, la tolérance aux défaillances, la durée de vie de réseau ou n'importe quelle combinaison de ceux-ci, associés au réseau.

15. Procédé tel que revendiqué dans la revendication **9** ou **10**, dans lequel lors de la réception de la requête pour accéder aux services, le procédé comprenant :

une consultation sur l'ensemble du registre de services stocké dans l'appareil, chaque ressource dans le réseau comprenant un registre de services conservant des informations de service vérifiées ; et
une recherche, sur la base d'un domaine du service ou du registre de services, ou d'un trajet associé au service, ou de n'importe quelle combinaison de ceux-ci, au sujet d'une disponibilité du service requis par le dispositif client.

**FIGURE 1 (PRIOR-ART)**

**FIGURE 2 (PRIOR-ART)**

**FIGURE 3 (PRIOR-ART)**

**FIGURE 4 (PRIOR-ART)**

**FIGURE 5**

**FIGURE 6**

**FIGURE 7**

**APPARATUS (800)**

**PROCESSOR (802)**

**INTERFACE (804)**

**MEMORY (806)**

**OBTAINING MODULE (808)**

**CREATION MODULE (810)**

**LOOKUP MODULE (812)**

**ACCESS MODULE (814)**

**DATABASE (816)**

**FIGURE 8**

**FIGURE 9**

Start

Device registers service with RD Server

Commissioning Agent verifies Pre-registered service with RD

Service Authorization,

Commissioning Agent defines policies on resource control at the provisioning server

Resource Control,

Client sends request to provisioning server for service access

Provisioning server checks for clients authorization, resource control policies of a specific service access.

Provisioning server requests the service to resource.

Client Authorization, and Admission Control

Provisioning server intimates to client about service grant/deny

End

START

PERFORM A DOMAIN LOOKUP IN RD DEVICE (1002)

OBTAIN A SPECIFIC DOMAIN AND A SPECIFIC GROUP OF SERVICES (1004)

VERIFY SERVICE PRE-REGISTERED (1006)

OBTAIN SERVICE INFORMATION HAVING PRE-REGISTERED SERVICE ALONG WITH ASSOCIATED DEVICE (1008)

RECEIVE SAID SERVICE INFORMATION (1010)

CREATE A SERVICE IDENTIFICATION (ID) (1012)

CREATE ADMISSION CONTROL POLICY AND/OR RESOURCE CONTROL POLICY FOR SAID SERVICE ID (1014)

RECEIVE SERVICE ACCESS REQUEST FROM A CLIENT DEVICE (1016)

LOOKUP FOR SERVICE ID ASSOCIATED WITH SAID SERVICE (1018)

GRANT/ DENY ACCESS FOR SAID SERVICE TO SAID CLIENT DEVICE (1020)

END

FIGURE 10

Device                                                                    RD Server

    [Device UID, Domain, Group, Endpoint Type]
    POST /rd?ep=node1&d=myhome.com&et=temperature-
    no& gp=thermostat&con=DeviceID(1001)

    2.01 Created Location: /rd/7521

**FIGURE 11**

Commissioning Agent                                                      RD Server

                        GET /rd-lookup/d

            2.05 Content </rd>; d=myhome.com, </rd>; d=myhome.com

            GET /rd-lookup/gp?ep=node1&d=myhome.com

            2.05 Content <coap://ip:port>;gp=thermostat;ep=node1

            GET /rd-lookup/res?rt=temp&gp=thermostat&d=myhom`.com

        2.05 Content <coap://host:port>;rt=temp;gp=thermostat;d=myhome.com

Authenticate
Service Info &
Device ID

                        POST Verified User; DeviceID

                        2.00 OK

**FIGURE 12**

**FIGURE 13**

**FIGURE 14**

Each group has specific set of permissions, QoS classes. So when clients registers with the service provider, the service provider decides to which group the client belongs. Moreover, he prioritizes the clients based on its pre-level agreements (e.g. based on some cost model).

**FIGURE 15**

**FIGURE 16**

Air Conditioner (IP2)  Thermostat (IP1)  Provisioning Server (IP3)

coap://thermostat.myhome.com/temp

POST /thermostat
HOST thermostat.ps.myhome.com
Content-Type: application/text
{ SRC: <IP1,port>
  DST: <IP3,port>
  Client: <IP2,port> }

2.00 OK { Permit/Deny }

URI-Path: temp CON 200

("thermostat","aaaa::212. 7402.2.202","temp",27)

**FIGURE 17**

Client  Provisioning Server  Thermostat

http://thermostat.myhome.com/temp

http://192.168.1.20/temperature
GET /temperature HTTP/1.1
HOST: thermostat.myhome.com

coap://thermostat.myhome.com/temp

coap://[aaaa::212:7402:2:202]/temperature
CON GET

URI-Path: temp CON 200

HTTP/1.1 200 OK
Temperature: 27

**FIGURE 18**

**FIGURE 19**

**FIGURE 20**

**FIGURE 21**

**FIGURE 22**

EP 3 295 652 B1

**FIGURE 23**

**FIGURE 24**

37

START

OBTAIN VERIFIED SERVICE INFORMATION (2502)

CREATE A SERVICE REGISTRY (2504)

CREATE SERVICE IDENTIFICATION (ID) (2506)

CREATE ADMISSION CONTROL POLICY AND/OR RESOURCE CONTROL POLICY (2508)

LOOKUP FOR SERVICES (2510)

GRANT ADMISSION BASED ON AVAILABILITY OF THE SERVICE REQUESTED (2512)

END

FIGURE 25

**REFERENCES CITED IN THE DESCRIPTION**

**Patent documents cited in the description**

- US 2009089866 A1

**Non-patent literature cited in the description**

- **RAHMAN A et al.** *Group Communication for CoAP;draft-ietf-core-groupcomm-03*